# EUROPEAN PATENT APPLICATION

(11) **EP 0 770 629 A2**
(43) Date of publication of application: **02.05.1997**
(21) Application number: 96307752.4
(22) Date of filing: 25.10.1996
(51) Int. Cl.: C08F 10/02, C08F 2/00, C08F 2/34, C08F 4/605, C08F 297/08

(54) **A process for preparing an in situ polyethylene blend**

(30) Priority: 26.10.1995 US 548593
(71) Applicant: UNION CARBIDE CHEMICALS & PLASTICS TECHNOLOGY CORPORATION, Danbury, Connecticut 06817-0001 (US)
(72) Inventor: Foster, George Norris, Bloomsbury, New Jersey 08804 (US); James, David Edward, Milford, New Jersey 08848 (US); Karol, Frederick John, Belle Mead, New Jersey 08502 (US)
(74) Representative: Allard, Susan Joyce

(57) **Abstract**

A process for the production of an in situ polyethylene blend comprising contacting at least one metallocene based catalyst system with one or more alpha-olefins in each of two or more reactors connected in series, in the gas phase, under polymerization conditions, with the provisos that:
(a) ethylene is introduced into each reactor;
(b) optionally, an alpha-olefin having at least 3 carbon atoms or a diene is introduced into at least one reactor;
(c) the mixture of ethylene polymer matrix and catalyst formed in the first reactor in the series is transferred to the subsequent reactors in the series; and
(d) the polymerization conditions in each reactor are such that a high molecular weight polymer is formed in at least one reactor and a low molecular weight polymer is formed in at least one other reactor.

## Description

### Technical Field

This invention relates to a process for preparing an in situ polyethylene blend, using at least one metallocene catalyst in two or more reactors in series.

### Background Information

Polyethylenes of various densities have been prepared and converted into film characterized by excellent tensile strength, high ultimate elongation, good impact strength, and excellent puncture resistance. These properties together with toughness are enhanced when the polyethylene is of high molecular weight. However, as the molecular weight of the polyethylene increases, the processability of the resin usually decreases. By providing a blend of polymers of high molecular weight and low molecular weight, the properties characteristic of high molecular weight resins can be retained and processability, particularly extrudability (a characteristic of the lower molecular weight component) can be improved.

The blending of these polymers in a staged reactor process is described in United States Patent Nos. 5,047,468 and 5,149,738. Briefly, the process is one for the in situ blending of polymers wherein a high molecular weight ethylene copolymer is prepared in one reactor and a low molecular weight ethylene copolymer is prepared in another reactor. The process typically comprises continuously contacting, under polymerization conditions, a mixture of ethylene and one or more alpha-olefins with a catalyst system in two gas phase, fluidized bed reactors connected in series, said catalyst system comprising: (i) a supported magnesium/titanium based catalyst precursor; (ii) one or more aluminum containing activator compounds; and (iii) a hydrocarbyl aluminum cocatalyst.

While the in situ blends prepared as above and the films produced therefrom are found to have the advantageous characteristics, the commercial application of these granular bimodal polymers is frequently limited by the level of undispersed high molecular weight material, commonly termed "gels", obtained. In addition, the specific catalyst system is known to produce a very broad molecular weight distribution which also poses certain disadvantages to the precise control of polymer structure and properties.

### Disclosure of the Invention

An object of this invention, therefore, is to provide a new process for preparing an in situ blend, which, can overcome some of the disadvantages of the earlier systems.

In accordance with the present invention such a process comprises contacting a catalyst system containing at least one metallocene based catalyst system with one or more alpha-olefins in two or more reactors connected in series, in the gas phase, under polymerization conditions.

Ethylene is introduced into each reactor; optionally, one or more alpha-olefin and or diene having at least 3 carbon atoms is introduced into at least one reactor; at least one active catalyst is formed in the first reactor; the mixture of ethylene polymer matrix and catalyst formed in the first reactor in the series is transferred to the subsequent reactors in the series and the polymerization conditions in each reactor are such that a high molecular weight polymer is formed in at least one reactor and a low molecular weight polymer is formed in at least one other reactor. At least one of the catalysts is a metallocene.

### Detailed Description of the Invention

While the polymer blend can be produced in two or more reactors connected in series, it is preferably produced in two reactors connected in series wherein a mixture of resin and catalyst precursor is transferred from the first reactor to the second reactor in which another polymer is prepared and blends in situ with the polymer from the first reactor. Where more than two reactors are used, it will be understood that the mixture of resin and catalyst from the first reactor is transferred from reactor to reactor in the series together with the resin formed in each of the subsequent reactors. Thus, there is a continuous blending.

For the purposes of this specification, the term "reactor" can mean either an independent reactor or a stage within a reactor. Thus, the process can be carried out in two or more independent reactors; in two or more stages within one reactor; or in a combination of reactors and stages, all connected in series. It is preferred, however, to carry out the process of the invention in two independent reactors.

The polymer produced in any of the reactors can be a homopolymer of ethylene or a copolymer of ethylene and at least one alpha-olefin having at least 3 carbon atoms. Preferably, the copolymers of ethylene and at least one alpha-olefin comonomer have 3 to 12 carbon atoms, and or one diene comonomer having 4 to 12 carbon atoms. The alpha-olefins most preferably have 3 to 8 carbon atoms, and can be, for example, propylene, 1-butene, 1-hexene, 4-methyl-1-pentene, or 1-octene. Further, no more than one or two alpha-olefin comonomers per reactor, in addition to ethylene, is suggested. Typically, the blends produced are homopolymer/-homopolymer blends, homopolymer/copolymer blends, and copolymer/copolymer blends.

It will be understood that the in situ blend can be characterized as a multimodal resin, preferably bimodal or trimodal. The resin can be multimodal in terms of molecular weight distribution and or comonomer distribution. The properties of multimodal resins are strongly dependent on the proportions of the individual in-situ blend components.

The metallocene catalysts useful in the present invention are organometallic compounds which are cyclopentadienyl derivatives of transition metals, preferably of a Group IVB, VB, VIB or VIII metal of the Periodic Table and include mono, di and tricyclopentadienyls and their derivatives of the transition metals. Particularly desirable are metallocene complexes of a Group IVB and VB metal such as titanium, zirconium, hafnium and vanadium. Aluminoxanes and boron compounds are well known in the art as metallocene activators and are to be employed as such in the present invention.

The preferred metallocenes may be represented by the general formula:

(C₅Rₓ)_{y}R'_{z}(C₅Rₘ)MQ_{n-y-1} (I)

wherein:
M is a metal of Groups IIIB to VIII of the Periodic Table of the Elements;
(C₅Rₓ) and (C₅Rₘ) are the same or different cyclopentadienyl or substituted cyclopentadienyl groups bonded to M; R is the same or different and is hydrogen or a hydrocarbyl radical such as alkyl, alkenyl, aryl, alkylaryl, or arylalkyl radical containing from 1 to 20 carbon atoms or two carbon atoms are joined together to form a C₄-C₆ ring;
R' is a C₁-C₄ substituted or unsubstituted alkylene radical, a dialkyl or diaryl germanium or silicon, or an alkyl or aryl phosphine or amine radical bridging two (C₅Rₓ) and (C₅Rₘ) rings; Q is a hydrocarbyl radical such as aryl, alkyl, alkenyl, alkylaryl, or aryl alkyl radical having from 1-20 carbon atoms, hydrocarboxy radical having from 1-20 carbon atoms or halogen and can be the same or different from each other;
z is 0 or 1;
y is 0, 1 or 2;
z is 0 when y is 0;
n is 0, 1, 2, 3, or 4 depending upon the valence state of M;
and n - y is ≥ 1.

Illustrative but non-limiting examples of the metallocenes represented by the above formula are dialkyl metallocenes such as bis(cyclopentadienyl)titanium dimethyl, bis(cyclopentadienyl)titanium diphenyl, bis(cyclopentadienyl)zirconium dimethyl, bis(cyclopentadienyl)zirconium diphenyl, bis(cyclopentadienyl)hafnium dimethyl and diphenyl, bis(cyclopentadienyl)titanium di-neopentyl, bis(cyclopentadienyl)zirconium di-neopentyl, bis(cyclopentadienyl)titanium dibenzyl, bis(cyclopentadienyl)zirconium dibenzyl, bis(cyclopentadienyl)vanadium dimethyl; the mono alkyl metallocenes such as bis(cyclopentadienyl)titanium methyl chloride, bis(cyclopentadienyl)titanium ethyl chloride, bis(cyclopentadienyl)titanium phenyl chloride, bis(cyclopentadienyl)zirconium methyl chloride, bis(cyclopentadienyl)zirconium ethyl chloride, bis(cyclopentadienyl)zirconium phenyl chloride, bis(cyclopentadienyl)titanium methyl bromide; the trialkyl metallocenes such as cyclopentadienyl titanium trimethyl, cyclopentadienyl zirconium triphenyl, and cyclopentadienyl zirconium trineopentyl, cyclopentadienyl zirconium trimethyl, cyclopentadienyl hafnium triphenyl, cyclopentadienyl hafnium trineopentyl, and cyclopentadienyl hafnium trimethyl; monocyclopentadienyls titanocenes such as, pentamethylcyclopentadienyl titanium trichloride, pentaethylcyclopentadienyl titanium trichloride; bis(pentamethylcyclopentadienyl) titanium diphenyl, the carbene represented by the formula bis(cyclopentadienyl)titanium=CH2 and derivatives of this reagent; substituted bis(cyclopentadienyl)titanium (IV) compounds such as: bis(indenyl)titanium diphenyl or dichloride, bis(methylcyclopentadienyl)titanium diphenyl or dihalides; dialkyl, trialkyl, tetra-alkyl and penta-alkyl cyclopentadienyl titanium compounds such as bis(1,2-dimethylcyclopentadienyl)titanium diphenyl or dichloride, bis(1,2-diethylcyclopentadienyl)titanium diphenyl or dichloride; silicon, phosphine, amine or carbon bridged cyclopentadiene complexes, such as dimethyl silyldicyclopentadienyl titanium diphenyl or dichloride, methyl phosphine dicyclopentadienyl titanium diphenyl or dichloride, methylenedicyclopentadienyl titanium diphenyl or dichloride and other dihalide complexes, and the like; as well as bridged metallocene compounds such as isopropyl(cyclopentadienyl)(fluorenyl)zirconium dichloride, isopropyl(cyclopentadienyl) (octahydrofluorenyl)zirconium dichloride diphenylmethylene(cyclopentadienyl)(fluorenyl) zirconium dichloride, diisopropylmethylene (cyclopentadienyl)(fluorenyl)zirconium dichloride, diisobutylmethylene(cyclopentadienyl)(fluorenyl) zirconium dichloride, ditertbutylmethylene (cyclopentadienyl)(fluorenyl)zirconium dichloride, cyclohexylidene(cyclopentadienyl)(fluorenyl) zirconium dichloride, diisopropylmethylene (2,5-dimethylcyclopentadienyl)(fluorenyl)zirconium dichloride, isopropyl(cyclopentadienyl)(fluorenyl) hafnium dichloride, diphenylmethylene (cyclopentadienyl) (fluorenyl)hafnium dichloride, diisopropylmethylene(cyclopentadienyl) (fluorenyl)hafnium dichloride, diisobutylmethylene(cyclopentadienyl) (fluorenyl)hafnium dichloride, ditertbutylmethylene(cyclopentadienyl) (fluorenyl)hafnium dichloride, cyclohexylidene(cyclopentadienyl)(fluorenyl)hafnium dichloride, diisopropylmethylene(2,5-dimethylcyclopentadienyl) (fluorenyl)hafnium dichloride, isopropyl(cyclopentadienyl)(fluorenyl)titanium dichloride, diphenylmethylene(cyclopentadienyl) (fluorenyl)titanium dichloride, diisopropylmethylene(cyclopentadienyl) (fluorenyl)titanium dichloride, diisobutylmethylene(cyclopentadienyl) (fluorenyl)titanium dichloride, ditertbutylmethylene(cyclopentadienyl) (fluorenyl)titanium dichloride, cyclohexylidene(cyclopentadienyl) (fluorenyl)titanium dichloride, diisopropylmethylene(2,5 dimethylcyclopentadienyl fluorenyl)titanium dichloride, racemic-ethylene bis (1-indenyl) zirconium (IV) dichloride, racemic-ethylene bis (4,5,6,7-tetrahydro-1-indenyl) zirconium (IV) dichloride, racemic-dimethylsilyl bis (1-indenyl) zirconium (IV) dichloride, racemic-dimethylsilyl bis (4,5,6,7- tetrahydro-1-indenyl) zirconium (IV) dichloride, racemic-1,1,2,2- tetramethylsilanylene bis (1-indenyl) zirconium (IV) dichloride, racemic-1,1,2,2-tetramethylsilanylene bis (4,5,6,7-tetrahydro-1- indenyl) zirconium (IV), dichloride, ethylidene (1-indenyl tetramethylcyclopentadienyl) zirconium (IV) dichloride, racemic- dimethylsilyl bis (2-methyl-4-t-butyl-1-cyclopentadienyl) zirconium (IV) dichloride, racemic-ethylene bis (1-indenyl) hafnium (IV) dichloride, racemic-ethylene bis (4,5,6,7-tetrahydro-1-indenyl) hafnium (IV) dichloride, racemic-dimethylsilyl bis (1-indenyl) hafnium (IV) dichloride, racemic-dimethylsilyl bis (4,5,6,7-tetrahydro-1- indenyl) hafnium (IV) dichloride, racemic-1,1,2,2-tetramethylsilanylene bis (1-indenyl) hafnium (IV) dichloride, racemic-1,1,2,2-tetramethylsilanylene bis (4,5,6,7-tetrahydro-1- indenyl) hafnium (IV), dichloride, ethylidene (1-indenyl-2,3,4,5- tetramethyl-1-cyclopentadienyl) hafnium (IV) dichloride, racemic- ethylene bis (1-indenyl) titanium (IV) dichloride, racemic-ethylene bis (4,5,6,7-tetrahydro-1-indenyl) titanium (IV) dichloride, racemic- dimethylsilyl bis (1-indenyl) titanium (IV) dichloride, racemic- dimethylsilyl bis (4,5,6,7-tetrahydro-1-indenyl) titanium (IV) dichloride, racemic-1,1,2,2-tetramethylsilanylene bis (1-indenyl) titanium (IV) dichloride racemic-1,1,2,2-tetramethylsilanylene bis (4,5,6,7-tetrahydro-1-indenyl) titanium (IV) dichloride, and ethylidene (1-indenyl-2,3,4,5-tetramethyl-1-cyclopentadienyl) titanium IV) dichloride.

Another preferred catalyst is generated by reacting a catalyst precursor of either Formula I or Formula II as set forth below with a cocatalyst, such as methylaluminoxane or modified methylaluminoxane, to generate the catalyst. 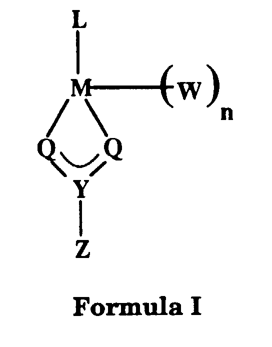 wherein:
M is a transition metal, preferably Zr or Hf;
L is a substituted or unsubstituted, π-bonded ligand coordinated to M, preferably a substituted cyclopentadienyl ligand;
Q can be the same or different and is independently selected from the group consisting of -O-, -NR-, -CR₂- and -S-, preferably oxygen;
Y is either C or S, preferably carbon;
Z is selected from the group consisting of -OR, -NR₂, -CR₃, -SR, -SiR₃, -PR₂ or -H, with the proviso that when Q is -NR-then Z is selected from the group consisting of -OR, -NR₂, -SR, -SiR₃, -PR₂ or -H, preferably Z is selected from the group consisting of -OR, -CR₃ and -NR₂;
n is 1 or 2;
W is a univalent anionic group when n is 2 or W is a divalent anionic group when n is 1, preferably W is a carbamate, carboxylate or other heterpallyl moiety described by Q, Y and Z combination and
R can be the same or different and is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl or an aryl group and one or more may be attached to the L substituent. 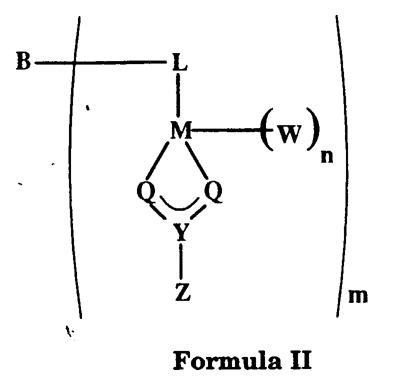
wherein:
M is a transition metal, preferably Zr or Hf;
L is a substituted or unsubstituted, π-bonded ligand coordinated to M, preferably a substituted cyclopentadienyl ligand;
Q can be the same or different and is independently selected from the group consisting of -O-, -NR-, -CR₂- and -S-, preferably oxygen;
Y is either C or S, preferably carbon;
Z is selected from the group consisting of -OR, -NR₂, -CR₃, -SR, -SiR₃, -PR₂ or -H, with the proviso that when Q is -NR-then Z is selected from the group consisting of -OR, -NR₂, -SR, -SiR₃, -PR₂ or -H, preferably Z is selected from the group consisting of -OR, -CR₃ and -NR₂;
n is 1 or 2;
W is a univalent anionic group when n is 2 or W is a divalent anionic group when n is 1, preferably is a carbamate, carboxylate or other heterpallyl moiety described by Q, Y and Z combination;
R can be the same or different and is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl or an aryl group and one or more may be attached to the L substituent;
B is a bridging group connecting selected from the group consisting of an alkylene or arylene group containing from 1 to 10 carbon atoms optionally substituted with carbon or heteroatoms, germaniun, silicone and alkyl phosphine; and
m is 1 to 7, preferably 2 to 6, most preferably 2 or 3.

The supportive substituent formed by Q, Y and Z is a uncharged polydentate ligand exerting electronic effects due to its high polarizibility, similar to the Cp' group. In the most preferred embodiments of this invention, the disubstituted carbamates, 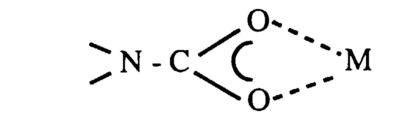 and the carboxylates 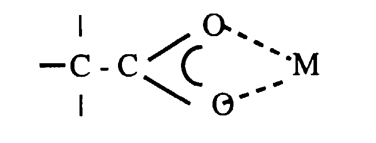 are employed. A particularly preferred embodiment of the invention is the indenyl zirconium tris(diethylcarbamate).

The catalyst precursor of the present invention may be made using any conventional process; the method of manufacture not being critical. In a preferred method of manufacturing this catalyst, a source of cyclopentadienyl ligand is reacted with a metal compound of the formula M(NR₂)₄ in which M and R are defined above to introduce the cyclopentadienyl-type ligand onto the metal compound. The resulting product is then dissolved in an inert solvent, such as toluene, and the heterocummulene such as in this instance CO₂, is contacted with the dissolved product to insert into one or more M-NR₂ bonds to form, in this instance, a carbamate. These precursors are then reacted with an activator, such as aluminoxane, to form the active catalyst.

Examples of other catalyst precursors include indenyl zirconium tris(pivalate) or indenyl zirconium tris(p-toluate) zirconium tris(pivalate), indenyl zirconium tris(p-toluate), indenyl zirconium tris(benzoate), (1-methylindenyl)zirconium tris(pivalate), (2-methylindenyl) zirconium tris(diethylcarbamate), (methylcyclopentadienyl) zirconium tris(pivalate), cyclopentadienyl tris(pivalate), (pentamethylcyclopentadienyl) zirconium tris(benzoate).

As noted above, these catalyst precursors are used in conjunction with activating cocatalysts to form catalyst compositions for the production of polyolefins. Preferably, the activating cocatalysts are one of the following: (a) branched or cyclic oligomeric poly(hydrocarbylaluminum oxide) that contain repeating units of the general formula -(Al(R)O)-, where R is an alkyl radical containing from 1 to about 12 carbon atoms, or an aryl radical such as a substituted or unsubstituted phenyl or naphthyl group or (b) borates, such as tri(pentafluorophenyl) borate, triethyl tetra(pentafluorophenyl) borate and the like.

Preferably, the activating cocatalyst is a branched or cyclic oligomeric poly(hydrocarbylaluminum oxide). More preferably, the activating cocatalyst is an aluminoxane such as methylaluminoxane or modified methylalumin-oxane.

This catalytically active material, in accordance with the present invention, may be dissolved in a suitable solvent so as to be provided as a solution to the reaction zone. Of course, as was noted above, the catalytically active material, which is the reaction product of the metallocene and the aluminoxane, is most preferably and conveniently formed in situ by mixing the metallocene catalyst and the aluminoxane co-catalyst just prior to introducing the mixture into the reactor while providing enough residence time for the reaction to occur so as to form the catalytically active material. Although this embodiment is more desirable than first forming and separating the solid reaction product and then forming a solution thereof which is introduced into the reaction zone, this latter embodiment is still within the scope of the present invention.

The amount of aluminoxane and metallocene usefully employed in preparation of the catalytically active material, whether the active material is formed in situ as it is being introduced into the gas phase reactor or formed well in advance and introduced as such while in liquid form, can vary over a wide range. The mole ratio of aluminum atoms contained in the aluminoxane to metal atoms contained in the metallocene is generally in the range of from about 2:1 to about 10,000:1, preferably in the range of from about 10:1 to about 1,000:1, and more preferably in the range of from about 50:1 to about 200:1.

The metallocene catalyst system can be fed into the first reactor as one or more different metallocenes or into the second reactor. In another embodiment, a different metallocene catalyst system may be fed into each reactor. Yet another embodiment has a metallocene catalyst system fed into one reactor and a conventional Ziegler/Natta catalyst into the other. In this last embodiment the Ziegler/Natta catalyst is preferably a magnesium/titanium based catalyst as exemplified by the catalyst system described in United States patent 4,302,565.

The metallocene catalyst system can be used in an unsupported form as taught, in U.S. Patent No. 5,317,036 or as a spray dried material as taught in U.S. Serial No. 197,922 filed February 17, 1994. Preferably the catalyst system is used in an unsupported manner. In those cases where it is desired to support the catalyst precursor or aluminoxane, silica is the preferred support. Other suitable supports are inorganic oxides such as aluminum phosphate, alumina, silica/alumina mixtures, and silica modified with reagents capable of reacting with surface silanols such aluminum compounds exemplified by alkylaluminums and aluminum halides, boron alkyls and halides, dialkyl zincs, and hexamethyldisilazane. A typical support is a solid, particulate, porous material essentially inert to the polymerization. It is used as a dry powder having an average particle size of about 5 to about 250 microns and preferably about 10 to about 100 microns; a surface area of at least 50 square meters per gram and preferably at least about 250 square meters per gram; and a pore size of at least about 50 angstroms and preferably at least about 200 angstroms. A typical silica support having an average particle size of 75 microns and a particle size distribution span of 0.9 to 1.5 can, for example, be obtained by fractionating a silica support having an average particle size of 80 microns and a particle size distribution span of 1.9.

In a typical process producing resin that is multimodal in molecular weight, the entire catalyst system, which includes the precursor or activated precursor and the cocatalyst, is added to the first reactor. This can be added either on a support or in solution. The catalyst is embedded in the copolymer produced in the first reactor, and the mixture is transferred to the second reactor. Insofar as the catalyst system is concerned, only cocatalyst is added to the second reactor from an outside source. Polymerization is conducted substantially in the absence of catalyst poisons such as moisture, oxygen, carbon monoxide, carbon dioxide, and acetylene.

A relatively low melt index (or high molecular weight) polymer can be prepared in the first reactor, and a relatively high melt index (or low molecular weight) polymer can be prepared in the second reactor. This can be referred to as the forward mode. Alternatively, the low molecular weight polymer can be prepared in the first reactor and the high molecular weight polymer can be prepared in the second reactor. This can be referred to as the reverse mode.

The mixture of polymer and an active catalyst is usually transferred from the first reactor to the second reactor via an interconnecting device using nitrogen or second reactor recycle gas as a transfer medium.

In the higher molecular weight reactor (forward mode): The flow index can be in the range of about 0.01 to about 100 grams per 10 minutes, and is preferably in the range of about 0.2 to about 20 grams per 10 minutes. The molecular weight of this polymer is, generally, in the range of about 30,000 to about 500,000. The density of the polymer can be at least 0.860 gram per cubic centimeter, and is preferably in the range of 0.900 to 0.940 gram per cubic centimeter. The melt flow ratio of the polymer can be in the range of about 16 to about 70, and is preferably about 16 to about 45.

Melt index is determined under ASTM D-1238, Condition E. It is measured at 190°C and 2.16 kilograms and reported as grams per 10 minutes. Flow index is determined under ASTM D-1238, Condition F. It is measured at 190°C and 10 times the weight used in determining the melt index, and reported as grams per 10 minutes. Melt flow ratio is the ratio of flow index to melt index.
In the lower molecular weight reactor:

The melt index can be in the range of about 0.2 to about 3000 grams per 10 minutes, and is preferably in the range of about 2 to about 1000 grams per 10 minutes. The molecular weight of the higher melt index polymer is, generally, in the range of about 15,000 to about 500,000. The density of the polymer prepared in this reactor can be at least 0.900 gram per cubic centimeter, and is preferably in the range of 0.910 to 0.975 gram per cubic centimeter. The melt flow ratio of this polymer can be in the range of about 16 to about 70, and is preferably about 16 to about 45.

The blend or final product, as removed from the second reactor, can have a melt index in the range of about 0.02 to about 20 grams per 10 minutes, and preferably has a melt index in the range of about 0.04 to about 5.0 grams per 10 minutes, or a flow index in the range of about 4 to about 165 grams per 10 minutes. The melt flow ratio is at least about 25, and is preferably in the range of about 25 to about 100. The molecular weight of the final product is, generally, in the range of about 50,000 to about 500,000. The density of the blend is at least 0.900 gram per cubic centimeter, and is preferably in the range of 0.910 to 0.960 gram per cubic centimeter.

In carrying out the process of the invention, it is preferred to essentially eliminate fines, which can be accomplished, for example, by sieving the blend in a conventional manner. Fines are generally considered to be particles having a particle size of less than about 200 microns.

As noted above, the blend can have narrow to broad molecular weight distribution which can be characterized as multimodal. The molecular weight distribution is reflected in an Mw/Mn ratio of about 2.5 to about 40, preferably about 3.0 to about 30. Mw is the weight average molecular weight; Mn is the number average molecular weight; and the Mw/Mn region can be referred to as the polydispersity index, which is a measure of the breadth of the molecular weight distribution. The weight ratio of the polymer prepared in the higher molecular weight reactor to the polymer prepared in the lower molecular weight reactor can be in the range of about 0.4:1 to about 2:1, and is preferably in the range of about 0.75:1 to about 1.6:1. The optimum weight ration is about 1:1. This is known as the split ratio or split.

In a typical process for the in situ blending of polymers, the catalyst system, ethylene, alpha-olefin, and hydrogen are continuously fed into the first reactor; the polymer/catalyst mixture is continuously transferred from the first reactor to the second reactor; ethylene, alpha-olefin, and hydrogen, as well as cocatalyst are continuously fed to the second reactor. The final product is removed from the second reactor.

In the lower melt index, as reflected in flow index ,reactor: Where it is desired to produce a copolymer, the mole ratio of alpha-olefin to ethylene can be in the range of about 0.001:1 to about 0.4:1, and is preferably in the range of about 0.001:1 to about 0.2:1. The mole ratio of hydrogen (if used) to ethylene can be in the range of about 0.0003:1 to about 0.3:1, and is preferably in the range of about 0.0007:1 to about 0.1:1. The operating temperature is generally in the range of about 60° C to about 100° C. Preferred operating temperatures vary depending on the density desired, i.e., lower temperatures for lower densities and higher temperatures for higher densities.
In the higher melt index reactor:

Where it is desired to produce a copolymer, the mole ratio of alpha-olefin to ethylene can be in the range of about 0.001:1 to about 0.6:1, and is preferably in the range of about 0.01:1 to about 0.42:1. The mole ratio of hydrogen to ethylene can be in the range of about 0.003:1 to about 3:1, and is preferably in the range of about 0.007:1 to about 2.2:1. The operating temperature is generally in the range of about 70° C to about 110° C. As mentioned above, the temperature is preferably varied with the desired density.

The polymer products capable of being produced by the present invention include both enhanced linear low density polyethylene and low density polyethylene that has characteristics akin to that produced via a high pressure process.

The pressure, i.e., the total pressure in each reactor, can be in the range of about 200 to about 450 psi and is preferably in the range of about 280 to about 350 psig. The ethylene partial pressure in the first reactor and the ethylene partial pressure in the second reactor are set according to the amount of polymer it is desired to produce in each of these reactors, i.e., to achieve the split ratio mentioned above. The balance of the total pressure is provided by alpha-olefin other than ethylene and an inert gas such as nitrogen.

The polymerization is preferably carried out in the gas phase in two or more fluidized bed reactors connected in series, but can also be carried out in one or more stirred-tank reactors.
A typical fluidized bed reactor can be described as follows:
The bed is usually made up of the same granular resin that is to be produced in the reactor. Thus, during the course of the polymerization, the bed comprises formed polymer particles, growing polymer particles, and catalyst particles fluidized by polymerization and modifying gaseous components introduced at a flow rate or velocity sufficient to cause the particles to separate and act as a fluid. The fluidizing gas is made up of the initial feed, make-up feed, and cycle (recycle) gas, i.e., comonomers and, if desired, modifiers and/or an inert carrier gas.

The essential parts of the reaction system are the vessel, the bed, the gas distribution plate, inlet and outlet piping, a compressor, cycle gas cooler, and a product discharge system. In the vessel, above the bed, there is a velocity reduction zone, and, in the bed, a reaction zone. Both are above the gas distribution plate. A typical fluidized bed reactor is described in United States Patent 4,482,687, and a typical fluidized bed polymerization procedure is described in United States Patent 4,302,565.

The gaseous feed streams of ethylene, other gaseous alpha-olefins, and hydrogen, when used, are preferably fed to the reactor recycle line as well as liquid alpha-olefins and the cocatalyst solution. Optionally, the liquid cocatalyst can be fed directly to the fluidized bed. The partially activated or completely activated catalyst precursor is preferably injected into the fluidized bed as a solid or a mineral oil slurry. In the case of partial activation, activator is added to the reactor. The product composition can be varied by changing the molar ratios of the comonomers introduced into the fluidized bed. The product is continuously discharged in granular or particulate form from the reactor as the bed level builds up with polymerization. The production rate is controlled by adjusting the partial pressure rate. The hydrogen:ethylene molar ratio can be adjusted to control average molecular weights. The alpha-olefins (other than ethylene) can be present in a total amount of up to 20 percent by weight of the copolymer and, if used, are preferably included in the copolymer in a total amount of about 1 to about 15 percent by weight based on the weight of the copolymer.

The residence time of the mixture of reactants including gaseous and liquid reactants, catalyst, and resin in each fluidized bed can be in the range of about 1 to about 12 hours and is preferably in the range of about 2 to about 5 hours.

A description of a typical stirred-tank reactor and process therefor follows. The stirred-tank reactor is a two-phase (gas/solid) stirred bed, back mixed reactor. A set of four "plows" mounted horizontally on a central shaft rotate at 200 revolutiqns per minute (rpm) to keep the particles in the reactor mechanically fluidized. The cylinder swept by these plows measures 40.6 centimeters (16 inches) in length by 39.7 centimeters (15.6 inches) in diameter, resulting in a mechanically fluidizable volume of 46 liters (1.6 cubic feet). The gas volume, larger than the mechanically fluidizable volume due to the vertical cylindrical chamber, totals 54.6 liters (1.93 cubic feet). A disengager vessel is mounted atop the vertical cylinder on the reactor. This vessel has a gas volume of 68 liters (2.41cubic feet), more than doubling the gas volume of the reactor. Gas is continually recirculated through both the reactor and disengager via a blower so that the gas composition is homogeneous throughout.

Reactor pressure used is typically 300 to 450 psig. Monomers and hydrogen (for molecular weight control) are fed to the reactor continuously via control valves. Partial pressures of monomer range typically between 150 to 300 psi. Comonomer (if any) content in the polymer is controlled by adjusting feed rates to maintain a constant comonomer/monomer molar ratio in the gas phase. Gas composition is measured at 4 to 6 minute intervals by a gas chromatograph analyzer. Molecular weight of the polymer is controlled by adjusting hydrogen feed rate to maintain a constant mole ratio of hydrogen to monomer in the gas phase. Nitrogen makes up the balance of the composition of the gas, entering with the catalyst and leaving via a small vent of the reactor gases. Vent opening is adjusted via computer to maintain constant total pressure in the reactor.

The reactor is cooled by an external jacket of chilled glycol. The bed temperature is measured with an RTD temperature probe in a thermowell protruding into the bed at a 60° angle below horizontal, between the inner set of plows. Reactor temperature can be controlled to values in the range of 10° to 110°C. Catalyst precursor can be fed either dry or as a slurry. Dry catalyst precursor is metered in shots into a 0.5 to 1 pound per hour nitrogen stream and is fed to the reactor via a 1/8 inch tube. Slurry catalyst precursor is metered in shots into a continuous stream of either isopentane or cocatalyst/isopentane solution in a 1/8 inch tube and this mixture is cofed to the reactor with a 0.5 to 1 pound per hour nitrogen stream, which keeps polymer from forming in the injection tube. In either case, the catalyst is injected into the bed at an angle of approximately 45° below vertical into the central zone between the front and rear plows.

Typical batch yields of granular polymer are 20 to 25 pounds with 30 to 35 pounds being the upper limit. Batch runs typically last 3 to 6 hours. Alternatively, the reactor can be run in the continuous mode in which granular polymer is withdrawn in typically 0.4 pound shots while the polymerization is in progress. In the continuous mode, the product discharge system is enabled after the bed weight builds to typically 15 to 25 pounds, and the rate of discharge is altered to maintain constant bed weight.

A typical run commences with monomers being charged to the reactor and feeds adjusted until the desired gas composition is reached. An initial charge of cocatalyst is added prior to starting catalyst precursor feeding in order to scavenge any poisons present in the reactor. After catalyst precursor feed starts, monomers are added to the reactor sufficient to maintain gas concentrations and ratios. As the catalyst inventory builds up, polymer production rate increases to 5 to 10 pounds per hour at which point catalyst precursor feed is adjusted to maintain a constant polymer production rate. Cocatalyst feed rate is maintained in proportion to the catalyst precursor feed rate. A start-up bed may be used to facilitate stirring and dispersal of catalyst during the initial part of the operation. After the desired batch weight is made, the reactor is quickly vented, and monomers are purged from the resin with nitrogen. The batch is then discharged into a box, open to the atmosphere, unless other catalyst deactivation measures are specified. For multicomponent operation, e.g., in situ blending, the desired fraction of resin is prepared under the initial reaction conditions, the conditions are changed to the conditions appropriate for the following stage of polymerization, and reaction is continued. It should be noted that the process can be operated in the condensing mode as taught in U.S. Patent Nos. 5,588,790; 5,352,749 and 5,436,304.

The resin blend obtained by any of the above processes can be extruded-in a conventional (smooth or groved barrel) extruder adapted for that purpose. Extruders and processes for extrusion are described in United States patents 4,814,135; 4,857,600; 5,076,988; and 5,153,382. Examples of various extruders, which can be used in forming the film are a single screw type such as one modified with a blown film die and air ring and continuous take off equipment, a blown film extruder, and a slot cast extruder. A typical single screw type extruder can be described as one having a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and multiple heating zones from the rear heating zone to the front heating zone, the multiple sections and zones running from upstream to downstream. If it has more than one barrel, the barrels are connected in series. The length to diameter ratio of each barrel is in the range of about 16:1 to about 30:1. The extrusion can take place at temperatures in the range of about 160 to about 270 degrees C, and is preferably carried out at temperatures in the range of about 180 to about 240 degrees C.
Various features mentioned above can also be found in United States Patents 4,684,703; 4,293,673; and 4,354,009.

Conventional additives, which can be introduced into the blend, are exemplified by antioxidants, ultraviolet absorbers, antistatic agents, pigments, dyes, nucleating agents, fillers, slip agents, fire retardants, plasticizers, processing aids, lubricants, stabilizers, smoke inhibitors, viscosity control agents, and crosslinking agents, catalysts, and boosters, tackifiers, and anti-blocking agents. Aside from the fillers, the additives can be present in the blend in amounts of about 0.1 to about 10 parts by weight of additive for each 100 parts by weight of polymer blend. Fillers can be added in amounts up to 200 parts by weight and more for each 100 parts by weight of the blend.

The invention is illustrated by the following examples.

### Example 1

The impregnated catalyst precursor is prepared as follows: A bis(cyclopentadienyl) zirconium ethyl chloride mixture is impregnated into a silica support from a solution of (toluene). The silica is first dried at 600°C to remove water and most of the surface silanols, and chemically treated with triethylaluminum (TEAL) to further passivate the remaining silanols. The treated support has an average particle size of 80 microns, and a span of 1.2. The dried free flowing impregnated precursor is then used in the polymerization.

The polymerization for each example is carried out in stages in the stirred-tank reactor described above. Polymerization is initiated by feeding an 8 gram batch charge of the above supported catalyst precursor and continuously feeding a cocatalyst into the reactor together with ethylene, 1-hexene, and hydrogen. When the desired amount of first stage resin has been produced, reaction conditions are changed to produce the second stage component. The reaction temperature, and ratios of ethylene, 1-hexene, and hydrogen are adjusted to give the final product having the desired ratio of components, and the desired composition of the second stage component. Additional catalyst is also introduced in the second stage of polymerization if the reaction rate begins to drop off. The in situ blend of copolymers is produced in granular form. The reaction conditions in each of the two stages are as set forth in Table I:

**Table I**

| **Catalyst Type** | Metallocene | Metallocene |
|---|---|---|
| **Reactor** | **first stage** | **second stage** |
| total pressure(psig) | 350 | 350 |
| temperature(°C) | 70 | 85 |
| H2/C2(molar ratio) | 0.000 | 0.001 |
| C6/C2(molar ratio) | 0.025 | 0.025 |
| C2 partial pressure(psi) | 250 | 180 |

The resin properties are set forth in Table II. These are the resin properties of the polyethylene produced in the first stage, and the properties of the final blend.

**Table II**

| **Example** | **1** | |
|---|---|---|
| | **1st stage** | **final blend** |
| melt index (g/10 min) | 0.05 | 1.6 |
| flow index (g/10 min) | 1 | 90 |
| melt flow ratio | 20 | 56 |
| density (g/cc) | 0.920 | 0.920 |
| bulk density (lbs/ cu ft) | ------ | 22 |
| APS (inch) | ------ | 0.032 |
| split (% by wt) | 50 | 50 |

The resins from the above examples are extruded into 35 micron thick films in a 20 millimeter Brabender^{TM} extruder fitted with a 150 millimeter ribbon die at a temperature of 200° C. 100 successive gels in each film are identified, and the size and distribution of the gels are determined via video microscopy. The frequency of gels of a given size (either by the diameter or area of the gel) is plotted against the size of the gel. The number of large (greater than 75 microns) gels and the number of small (less than 75 microns) gels are counted over a film area of 150 square centimeters. Two replicate measurements are made and averaged.

Characteristics of the above resins, i.e., the in situ blend, and the films are set forth in Table III:

**Table III**

| **Example** | **1** |
|---|---|
| melt index(g/10 min) | 1.4 |
| melt flow ratio | 58 |
| melt index variation | 1.1 to 1.7 |
| APS(microns) | 980 |
| percent fines(less than 200 microns) | 1.8 |
| gel count (per 150 cm²) | 22 |
| HMW/LMW | 6.62 |
| span | 1.4 |

### Example 2

A spray-dried catalyst precursor is prepared as follows: A solution of (indenyl zirconium tris(pivalate)) in aromatic solution is spray-dried from a slurry of collodal SiO₂ containing non-porous, hydrophobic colloidal silica of negligible pore volume. The dilution is 7 weight percent solids, with about 50:50 weight ratio of metal salts to filler. The resulting spray-dried precursor is separated by sieving. The particle size distribution and particle size distribution of the catalyst precursor is set forth in Table IV together with resin properties of the final blend. The polymers are produced in a stirred gas phase reactor under substantially the same conditions as described in Table I.

**Table IV**

| **Example** | **5** |
|---|---|
| Catalyst precursor sieve fraction | (through screen) |
| APS of catalyst precursor (microns) | 10 |
| Span of catalyst precursor | 1.5 |
| Flow index (g/10 min) | 1.7 |
| density (g/cc) | 0.920 |
| HMW/LMW | 5.68 |
| Gel count (gels/ 150 cm²) | 90 |

### Example 3

Polymerizations are conducted in a two-stage fluidized bed reactor using metallocene precursors impregnated into silica supports having the average particle sizes shown below. The silicas are first dehydrated at 600° C, and passivated. The metal loading employed is 0.22 to 0.25 millimole Zr per gram precursor and an Al/Zr ratio of about 200.

Polymerization is initiated in the first stage by continuously feeding the above impregnated precursor and a cocatalyst into a fluidized bed of polyethylene granules together with the gaseous comonomers and hydrogen. The resulting particles composed of nascent copolymer and dispersed active catalyst are withdrawn from the first stage and transferred to the second stage using either nitrogen or the gas composition of the second stage as a transfer medium. The second stage, on start-up, also contains a fluidized bed of polymer particles. Again, gaseous comonomer and hydrogen are introduced into the second stage where they come into contact with the particles coming from the first stage. Additional cocatalyst is also introduced. The polymer particles containing a mixture of first and second stage components are continuously removed. Variables with respect to catalyst precursor and conditions as well as the properties of the resin product are set forth in Table V. 1-Hexene is employed as comonomer.

Films are prepared, and optical properties determined as described above.

**Table V**

| **Example** | **3** | |
|---|---|---|
| catalyst precursor: | | |
| support (APS) | 75 | |
| support (span) | 0.91 | |
| **Reactor** | 1 | 2 |
| **Catalyst Type** | Metallocene | Metallocene |

| **Reaction conditions:** | | |
|---|---|---|
| temperature (°C) | 60 | 85 |
| pressure(psi) | 350 | 300 |
| H2/C2 mole ratio | 0.000 | 0.0005 |
| C6/C2 mole ratio | 0.04 | 0.018 |
| C2 partial pressure | 250 | 100 |
| split (% by wt) | 60 | 40 |
| **Resin properties** | | final blend |
| melt index (g/10 min) | 0.03 | 0.4 |
| flow index (g/10 min) | 0.6 | 20.8 |
| melt flow ratio | 20 | 52 |
| density (g/cc) | 0.905 | 0.915 |
| residual Zr(ppm) | 2.4 | 1.7 |
| HMW/LMW | | 5.92 |
| APS(inch) | 0.05 | 0.043 |
| FAR | | plus 40/50 |
| gels per 150cm² | | 14 |

### Example 4

Polymerizations are conducted in a two-stage fluidized bed reactor using Ziegler-Natta and metallocene precursors impregnated into silica supports having the average particle sizes and spans shown below. The silicas are first dehydrated at 600° C, and passivated. The metal loading employed is 0.22 to 0.25 millimole Zr per gram precursor and an Al/Zr ratio of about 200

Polymerization is initiated in the first stage by continuously feeding the above impregnated Ziegler-Natta precursors and a cocatalyst into a fluidized bed of polyethylene granules together with the gaseous comonomers and hydrogen. The resulting particles composed of nascent copolymer and dispersed active catalyst are withdrawn from the first stage and transferred to the second stage using either nitrogen or the gas composition of the second stage as a transfer medium. The second stage, on start-up, also contains a fluidized bed of polymer particles. Again, gaseous comonomer and hydrogen are introduced into the second stage where they come into contact with the particles coming from the first stage. Metallocene precusor and alumoxane (MAO) activator are introduced into the second reactor. The polymer particles containing a mixture of first and second stage components are continuously removed. Variables with respect to catalyst precursor and conditions as well as the properties of the resin product are set forth in Table VI. 1-Hexene is employed as comonomer.

Films are prepared, and optical properties determined as described above.

**Table VI**

| **Example** | **4** | |
|---|---|---|
| catalyst precursor: | | |
| support (APS) | 75 | |
| support (span) | 0.91 | |
| **Reactor** | 1 | 2 |
| **Catalyst Type** | Metallocene | Ziegler-Natta |

| **Reaction conditions:** | | |
|---|---|---|
| temperature (°C) | 60 | 90 |
| pressure(psi) | 350 | 300 |
| H2/C2 mole ratio | 0.0015 | 0.060 |
| C6/C2 mole ratio | 0.040 | 0.050 |
| C2 partial pressure | 250 | 50 |
| split (% by wt) | 50 | 50 |
| **Resin properties** | | final blend |
| melt index (g/10 min) | 0.05 | 1.6 |
| flow index (g/10 min) | 1.4 | 99 |
| melt flow ratio | 28 | 62 |
| density (g/cc) | 0.905 | 0.915 |
| residual Zr(ppm) | 3.0 | 1.5 |
| HMW/LMW | | 8.60 |
| APS(inch) | 0.05 | 0.043 |
| FAR | | plus 40/50 |
| gels per 150cm² | | 18 |

### Notes to Tables:

1. Melt Index (g/10 min) is determined under ASTM D-1238, Condition E. It is measured at 190°C and reported as grams per 10 minutes.
2. Flow Index is determined under ASTM D-1238, Condition F. It is measured at 10 times the weight used in the melt index test above. Flow index variation; flow index of sieved fractions from the largest (greater than 10 mesh) to the smallest (less than 140 mesh).
3. Melt Flow Ratio is the ratio of flow index to melt index
4. Density (g/cc) is the density of the ethylene/1-hexene copolymer product in gram per cubic centimeter.
5. The bulk density of each of the resins (not the blend) is given in pounds per cubic foot.
6. Split (% by wt): This is the percent by weight of each polyethylene in the blend based on the weight of the blend.
7. The catalyst precursor particle size and the polymer particle size are obtained from a Malvern™ 2600 particle size analyzer. Polymer particle size analyses are also obtained from a Rotap™ sieving device.
8. Gel count is the average of two counts, and includes both large and small gels affecting FAR values. The count is the number of gels per 150 square centimeters of film.
9. APS = average particle size.
10. HMW = high molecular weight
11. LMW = low molecular weight
12. Far is the film appearance rating, a rating derived by visual inspection of the film, discussed above.

## Claims

1. A process for the production of an in situ polyethylene blend comprising contacting at least one metallocene based catalyst system with one or more alpha-olefins in each of two or more reactors connected in series in the gas phase under polymerization conditions, with the provisos that:
(a) ethylene is introduced into each reactor;
(b) optionally, one or more alpha-olefin having at least 3 carbon atoms or diene comonomer is introduced into at least one reactor;
(c) the mixture of ethylene polymer matrix and catalyst formed in the first reactor in the series is transferred to the subsequent reactors in the series; and
(d) the polymerization conditions in each reactor are such that the resultant polymer is multimodal in molecular weight distribution or comonomer composition distribution or both.

2. A process as claimed in claim 1 wherein the metallocene based catalyst system is added only to the first reactor.

3. A process as claimed in claim 1 wherein the metallocene based catalyst system is added to each reactor.

4. A process as claimed in claim 1 wherein the metallocene based catalyst system is added to the reactor making the polyethylene with lower molecular weight and a Ziegler/Natta catalyst system is added to the reactor making the polyethylene with higher molecular weight.

5. A process as claimed in any one of the preceding claims wherein the metallocene is a carbamate or carboxylate of Formula I or II.

6. A process as claimed in any one of the preceding claims wherein the metallocene based catalyst system is an unsupported system.

7. A process as claimed in claim 6 wherein the metallocene is indenyl zirconium tris(diethyl carbamate).
